# EUROPEAN PATENT SPECIFICATION

(11) **EP 2 640 775 B1**
(45) Date of publication and mention of the grant of the patent: **22.03.2017**
(21) Application number: 11784509.9
(22) Date of filing: 18.11.2011
(51) Int. Cl.: C08K 5/00, C08J 3/20

(54) **STABILIZED COMPOSITION COMPRISING HOMOPOLYMERS OR COPOLYMERS OF ETHYLENE AND NATURAL ANTIOXIDANTS**
STABILISIERTE ZUSAMMENSETZUNG MIT HOMOPOLYMEREN ODER COPOLYMEREN AUS ETHYLEN UND NATÜRLICHEN ANTIOXIDANTIEN
COMPOSITION STABILISÉE COMPRENANT DES HOMOPOLYMÈRES OU COPOLYMÈRES DE L'ÉTHYLÈNE ET DES ANTI-OXYDANTS NATURELS

(30) Priority: 18.11.2010 IT MI20102136
(43) Date of publication of application: 25.09.2013
(73) Proprietor: Versalis S.p.A., 20097 San Donato Milanese (MI) (IT)
(72) Inventor: CARFAGNA, Cosimo, I-86082 Capracotta - Isernia (IT); CERRUTI, Pier Francesco, I-84025 Eboli - Salerno (IT); RENZI, Adolfo Izzo, I-80078 Pozzuoli - Napoli (IT); PERSICO, Paola, I-80128 Napoli (IT); MASI, Francesco, I-26866 Sant' Angelo Lodigiano (IT)
(74) Representative: Mauro, Marina Eliana
(86) International application number: PCT/EP2011/070468
(87) International publication number: WO 2012/066126

(56) References cited:
- EP-A2- 1 055 720
- WO-A2-2008/006890
- US-A- 5 023 235
- DATABASE CHEMABS [Online] CHEMICAL ABSTRACTS SERVICE, COLUMBUS, OHIO, US; 1990, KATANO RITSUKO ET AL: "ANTIOXIDANT COMPOSITIONS CONTAINING VITAMIN E AND GLUTATHIONE FOR COSM", XP002148545, retrieved from CHEMABS Database accession no. 1990-164753 & JP 1 256586 A (KOBAYASHI KOSE CO) 13 October 1989 (1989-10-13)

## Description

The present invention relates to a stabilized composition comprising homopolymers or copolymers of ethylene and natural antioxidants.

More specifically, the present invention relates to a stabilized composition according to claim 1 comprising at least one homopolymer or one copolymer of ethylene, from 1% by weight to 2% by weight with respect to the total weight of said stabilized composition of at least one tocopherol or its analogous and from 0.1% by weight to 1.5% by weight with respect to the total weight of said stabilized composition of at least one compound containing sulfur, selected from glutathione, α-lipoic acid, acetyl-cysteine.

The present invention also relates to end-products obtained from said stabilized composition.

In addition, the present invention relates to a stabilizing composition comprising at least one tocopherol or its analogous and at least one compound containing sulfur selected from glutathione, α-lipoic acid, acetyl-cysteine, as well as its use in the stabilization of homopolymers or copolymers of ethylene.

It is known that exposure to atmospheric oxygen which causes oxidation processes, combined with the action of temperature and of solar light, causes a series of structural changes in the main chain and/or in the side-chains of organic polymers, causing their degradation. Said degradation causes a deterioration in the physico-chemical properties of organic polymers, such as, for example, a decrease in the impact strength or in the flexural strength, which has a negative effect on the macroscopic properties of the end-products.

It is also known that the above-mentioned oxidation processes generally take place through a radical mechanism, according to the following scheme:
- start of the process with the formation of reactive radical species;
- propagation of the process through a series of chain reactions between radicals and oxygen dissolved in the organic polymer, with the further formation of peroxide radicals on the main chain and/or on the side-chains of said organic polymer;
- termination of the process through the deactivation of the above-mentioned peroxide radicals by interaction between the peroxide radicals and formation of stable covalent bonds.

Consequently, for any type of application, in particular for long-lasting applications or for applications which envisage exposure to high temperatures or atmospheric agents, the organic polymers are stabilized by the addition of primary antioxidants and of secondary antioxidants.

Primary antioxidants, also known as "radical scavengers", are compounds capable of intercepting free radicals by giving them an active hydrogen atom or electrons, converting them into more stable compounds. The most widely-used primary antioxidants are sterically hindered phenols, aromatic amines, sterically hindered amines.

Secondary antioxidants, known as "peroxide decomposers", are compounds capable of preventing the formation of free radicals by reaction with the peroxide radicals formed, converting them into non-radical and therefore non reactive species, and preventing the branching of the polymeric chains. The most widely-used secondary antioxidants are phosphites, phosphonites, thioesters, metal thiocarbamates.

A further function of the secondary antioxidants is to regenerate primary antioxidants. Secondary antioxidants normally operate better in the presence of primary antioxidants.

It is in fact known in the art that the addition of a primary antioxidant (e.g., a sterically hindered phenol) in combination with a secondary antioxidant (e.g., a phosphite or phosphonite) to an organic polymer, allows a synergic effect to be obtained, capable of significantly increasing the starting time of the degradation of said organic polymer.

The stabilization of organic polymers is one of the most important and interesting fields of research for both the scientific and industrial world. Future developments in this sector are being increasingly influenced by requirements of the environmental type which stabilizers must satisfy.

In particular, ecological restrictions are playing an ever-important role in the development of new stabilizers for organic polymers, especially with respect to stabilizers for organic polymers destined for food packaging.

The stabilizers most commonly used are generally synthetic compounds having relatively complex structures (e.g., sterically hindered phenols, aromatic amines, sterically hindered amines, phosphites, phosphonites). There is therefore the problem of their potentially dangerous effects when dispersed in the environment and, in particular, when used in organic polymers destined for food packaging. These stabilizers can in fact migrate directly, or release by-products, into the foods, thus altering the organoleptic properties of the same, or even creating toxic effects in their subsequent use.

Even if the risk of these potentially dangerous effects has been minimized, a research branch has been developed for identifying compounds of a natural origin as possible substitutes of the synthetic antioxidants mentioned above, in order to reduce to the minimum the risks connected with their use.

The limiting factor in the use of natural antioxidants, however, is often their low thermal stability. In fact, said natural antioxidants often decompose at the temperatures used in the processing of organic polymers.

Among natural antioxidants, tocopherols and their analogouses have been widely studied, in particular α-tocopherol or Vitamin E which is an essential and vital vitaminic nutrient for human beings and a powerful liposoluble antioxidant present in many vegetables.

The structure of tocopherols and of their analogouses is represented by the following general formula: 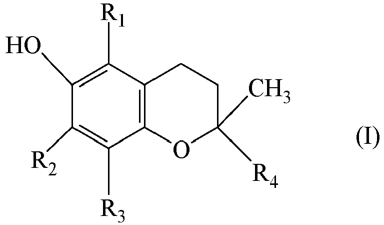 wherein:
- R₁, R₂ and R₃, equal to or different from each other, represent a hydrogen atom or a methyl group;
- R₄ represents a group having formula (II) or (III):

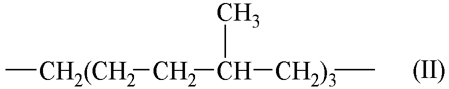

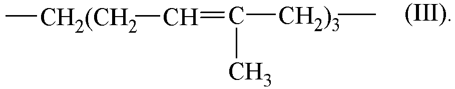

Various studies have been carried out in recent years which have demonstrated that α-tocopherol has an antioxidant effect also on organic polymers. See the following articles, in this respect:
- Al-Malaika et al., "The antioxidant role of α-tocopherol in polymers III. Nature of transformation products during polyolefins extrusions", published in Polymer Degradation and Stability (1999), Vol. 65, pages 143-151;
- Mallegol et al., "Antioxidant effectiveness of vitamin E in HDPE and tetradecane at 32°C", published in Polymer Degradation and Stability (2001), Vol. 73, pages 269-280;
- Suffield et al., "Evaluation of Antioxidant Performance of a Natural Product in Polyolefins", published in Journal of Vinyl and Additive Technology (2004), Vol. 10, pages 52-56;
- Strandberg and Albertsson, "Process Efficiency and Long-Term Performance of α-tocopherol in Film-Blown Linear Low-Density Polyethylene", published in Journal of Applied Polymer Science (2005), Vol. 98, pages 2427-2439;
- Strandberg and Albertsson, "Improvement of α-tocopherol long term Efficiency by modelling its Heterogeneous Natural Environment in Polyethylene", published in Journal of Applied Polymer Science: Part A: Polymer Chemistry (2006), Vol. 44, pages 1660-1666;
- Peltzer et al., "Thermal characterization of UHMWPE stabilized with natural antioxidants", published in Journal of Thermal Analysis and Calorimetry (2007), Vol. 87, pages 493-497.

Japanese patent application JP 53-133249 describes a composition having an enhanced discoloration prevention capacity and a synergic effect, comprising tocopherols, a glycerophosphate and a high-molecular-weight olefin polymer.

Japanese patent application JP 53-141354 describes a stabilized composition having an enhanced discoloration prevention capacity, comprising tocopherols, sugars, a polyhydric alcohol and a high-molecular-weight olefin polymer.

Japanese patent application JP 53-137244 describes a stabilized composition having an enhanced discoloration prevention capacity and an improved thermal stability, comprising tocopherols, a partial ester of a polyol fatty acid and a high-molecular-weight olefin polymer.

Japanese patent application JP 62-158737 describes a stabilized polyolefin composition having an excellent thermal stability, an excellent resistance to discoloration and an excellent resistance to oxidation, comprising a polyolefin (e.g., polypropylene), a specific 6-hydroxycumarone (e.g., tocopherol), a phenol [e.g., 1,3,5-trimethyl-2,4,6-tris(3,5-di-t-butyl-4-hydroxybenzyl)benzene] or a phosphonite [e.g., tetrakis(2,4-di-t-butylphenyl)-4,4'-biphenylene-di-phosphonite].

Japanese patent application JP 62-156151 describes a stabilized polyolefin composition having a good discoloration resistance, with no yellowing, comprising a polyolefin resin, a specific 6-hydroxycumarone (e.g., α-tocopherol, β-tocopherol), a compound selected from derivatives of polysiloxane (e.g., dimethylpolysiloxane, methylphenylpolysiloxane) and petroleum resins.

Japanese patent application JP 02-102241 describes a composition comprising at least one polypropylene resin, at least one metal salt of stearic acid (e.g., calcium stearate); at least one hydroxide, an oxide, or a salt of an alkaline earth metal (e.g., magnesium oxide); at least one tocopherol selected from α-tocopherol, β-tocopherol, γ-tocopherol, 5-tocopherol, or mixtures thereof; at least one compound containing phosphorous [e.g., tris(2,4-di-t-butylphenyl)-phosphite]. Said composition has an improved stability under the processing conditions of said polypropylene resin (e.g., extrusion).

Korean patent application KR 2001-0096332 describes a polyolefin composition comprising a polypropylene resin, a natural compound such as ascorbic acid or its derivatives as antioxidant, and/or a natural compound such as lactic acid or its derivatives as additive for improving the heat resistance.

Japanese patent application JP 07-097486 describes a composition comprising at least one polyolefin, at least one natural antioxidant selected from the group consisting of sesamol, quercetin, ferulic acid, catechin, eugenol, pinoresinol and chlorogenic acid.

Cerruti et al. in the article "Effect of natural antioxidants on the stability of polypropylene films", published in Polymer Degradation and Stability (2009), Vol. 94, pages 2095-2100, describe the effect of natural antioxidants deriving from waste-products of the agro-food industry such as powders of white and red grape seeds and tomato extracts.

Peltzer et al., in the article "Determination of oxidation parameters by DSC for polypropylene stabilized with hydroxytyrosol (3,4-dihydroxy-phenylethanol)", published in Journal of Thermal Analysis and Calorimetry (2009), Vol. 96, pages 243-248, describe the use of hydroxytyrosol (3,4-dihydroxy-phenylethanol) as natural antioxidant in polypropylene.

In the known art, however, there is no description of the use of natural secondary antioxidants together with natural primary antioxidants, such as, for example, tocopherols.

The Applicant has faced the problem of finding natural secondary antioxidants which, combined with natural primary antioxidants, in particular in combination with tocopherols or their analogouses, can be advantageously used in the stabilization of homopolymers or copolymers of ethylene.

The Applicant has now found that the use of at least one compound containing sulfur, selected from glutathione, α-lipoic acid, acetyl-cysteine as secondary antioxidant, combined with at least one tocopherol or its analogous, is capable of stabilizing homopolymers or copolymers of ethylene. In particular, said use allows compositions having a good resistance to oxidative degradation, to be obtained.

An objective of the present invention therefore relates to a stabilized composition comprising:
- at least one homopolymer or copolymer of ethylene;
- from 1% by weight to 2% by weight with respect to the total weight of said stabilized composition of at least one tocopherol or its analogous;
- from 0.1% by weight to 1.5% by weight with respect to the total weight of said stabilized composition of at least one compound containing sulfur selected from glutathione, α-lipoic acid, acetyl-cysteine.

In accordance with a preferred embodiment of the present invention, said homopolymer or copolymer of ethylene can be selected from:
- high-density polyethylene (HDPE);
- medium-density polyethylene (MDPE);
- low-density polyethylene (LDPE);
- linear low-density polyethylene (LLDPE), linear very-low-density polyethylene (VLDPE), linear ultra-low-density polyethylene (ULDPE), which are copolymers of ethylene with at least one aliphatic α-olefin having the formula CH₂=CH-R wherein R represents a linear or branched alkyl group, preferably linear, containing from 1 to 12 carbon atoms, selected, for example, from: propylene, 1-butene, 1-pentene, 1-hexene, 1-octene, 1-decene;
- ethylene-vinyl acetate copolymers (EVA);
- ethylene-propylene elastomeric copolymers (EPR);
- ethylene-propylene-diene elastomeric copolymers (EPDM) wherein the diene generally contains from 3 to 12 carbon atoms and can be selected from: 1,3-butadiene, isoprene, 1,4-hexadiene, 1,4-cyclohexadiene, 5-ethylidene-2-norbornene, 5-methylene-2-norbornene, or mixtures thereof;
or mixtures thereof.

Examples of homopolymers or copolymers of ethylene which can be used in the present invention and which are commercially available, are the products Flexirene^{®}, Eraclene^{®}, Riblene^{®}, Clearflex^{®}, Greenflex^{®}, Dutral^{®}, of Polimeri Europa; MDPE HT 514 of Total Petrochemical; Engage^{®} of DuPont-Dow Elastomers; Exact^{®} of Exxon Chemical.

The homopolymers or copolymers of ethylene indicated above can be obtained by means of polymerization techniques known in the art, in the presence of Ziegler-Natta catalysts, or in the presence of "single-site" catalysts, such as, for example, metallocene or hemi-metallocene catalysts, or through radical processes.

In accordance with a preferred embodiment of the present invention, said tocopherol or its analogous can be selected from tocopherols or their analogouses having general formula (I): 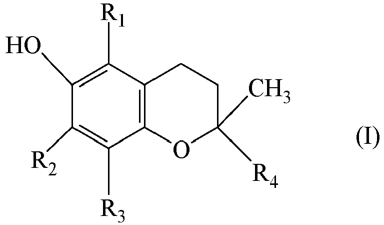 wherein:
- R₁, R₂ and R₃, equal to or different from each other, represent a hydrogen atom, or a methyl group;
- R₄ represents a group having formula (II) or (III):

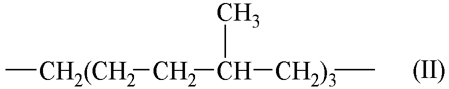

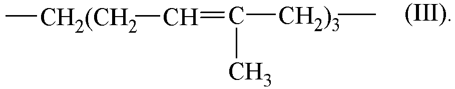

In accordance with a further embodiment of the present invention, said tocopherol or its analogous can be selected from:
- D,L-α-tocopherol (synthetic vitamin E);
- methyl derivatives of [2-methyl-2-(4',8'12'-trimethyltridecyl)-6-chromanol]tocol comprising D-α-tocopherol (5,7,8-trimethyltocol), D-β-tocopherol (5,8-dimethyltocol), D-γ-tocopherol (7,8-dimethyltocol), D-δ-tocopherol (8-methyltocol), or mixtures thereof (compounds present in natural Vitamin E);
- D-α-tocopherol acetate, D,L-α-tocopherol acetate, D-α-tocopherol succinate, acid succinate of polyethyleneglycol 1000 of D-α-tocopherol, D,L-α-tocopherol quinone, or mixtures thereof;
- methyl derivatives of [2-methyl-2-(4',8'12'-trimethyltrideca-3',7',11'-trienyl)-6-chromanol]tocotrienol;
or mixtures thereof.

In accordance with a particularly preferred embodiment of the present invention, said tocopherol is D-α-tocopherol having formula (Ia) :

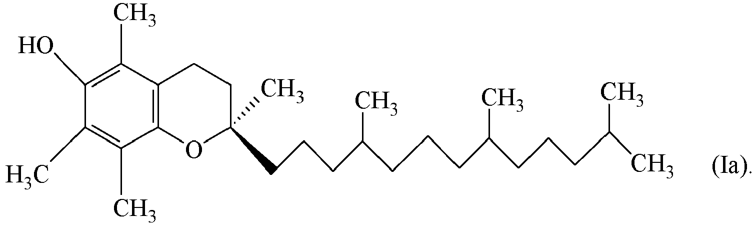

Glutathione, α-lipoic acid, acetyl-cysteine are compounds known as natural antioxidants used, in particular, for preventing damage from oxidation in the human body.

Glutathione, having formula (II) 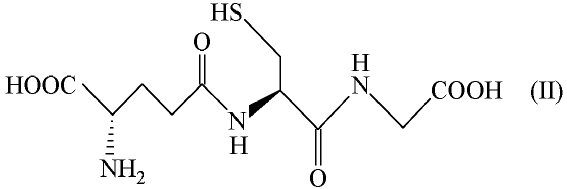 is a known defender of the cell system against oxidation effects as described, for example, in the following articles:
- Pastore et al., "Analysis of glutathione: implication in redox and detoxification", published in Clinica Chimica Acta (2003), Vol. 333, pages 19-39;
- Arteel and Sies, "The biochemistry of selenium and the glutathione system", published in Environmental Toxicology and Pharmacology (2001), Vol. 10, pages 153-158;
- Sionkowska, "The influence of glutathione on the photochemical stability of collagen", published in Polymer Degradation and Stability (2001), Vol. 73, pages 107-112.

α-Lipoic acid having general formula (III): 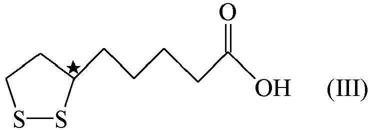 is a compound that plays a key role in the cell energy metabolism of most living beings. α-Lipoic acid in fact has some particular characteristics which make it not only extraordinarily effective as antioxidant, but also absolutely indispensable for our organism for contrasting damages associated with the formation of free radicals as described, for example, in the following article: Biewenga et al., "The pharmacology of the antioxidant", published in General Pharmacology (1997), Vol. 29, pages 315-331.

Acetyl-cysteine having formula (IV): 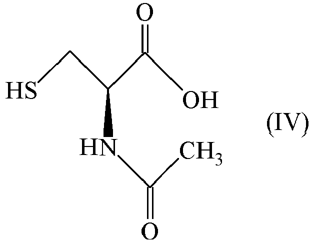 is the acetylated form, most effectively absorbed and metabolized, of the antioxidant sulfurated amino acid cysteine as described, for example, in the following article: Aruoma et al., "The antioxidant action of N-acetyl cysteine: its reaction with hydrogen peroxide, hydroxyl radical, superoxide, and hypochlorus acid", published in Free Radical Biology & Medicine (1989), Vol. 6, pages 593-597.

According to the present invention, said tocopherol or its analogous is present in the stabilized composition in an amount ranging from 1% by weight to 2% by weight, with respect to the total weight of said stabilized composition.

According to the present invention, said compound containing sulfur is present in the stabilized composition in an amount ranging from 0.1% by weight to 1.5% by weight, with respect to the total weight of said stabilized composition.

A further object of the present invention relates to end-products obtained from the above stabilized composition.

A further object of the present invention relates to the use of said stabilizing composition in the stabilization of homopolymers or copolymers of ethylene.

Some illustrative examples are provided hereunder for a better understanding of the present invention and for its embodiment.

### EXAMPLE 1

The following compounds were used:
- linear low density polyethylene (LLDPE): Flexirene^{®} CL 10 U (not stabilized) of Polimeri Europa;
- D-α-tocopherol (primary antioxidant), α,-lipoic acid and acetyl-cysteine (secondary antioxidants): Sigma Aldrich;
- glutathione (secondary antioxidant): Alfa Aeser.

The compositions comprising linear low density polyethylene (LLDPE) and the various antioxidants indicated above were prepared operating according to two different processes:
(a) in a mixer;
(b) in a twin-screw extruder.

### Process (a)

The linear low density polyethylene (LLDPE) and the various antioxidants (the amounts of the polyethylene and of the various antioxidants are indicated in Table 1) were fed to a Brabender Plastograph Ec mixer.

The mixer was heated to 190°C and kept at this temperature for 6 minutes, under stirring, at a screw rotation rate of 16 revs per minute.

At the end, the mixtures (M0 - M7) obtained were discharged from the mixer, cooled to room temperature (25°C) and pelletized manually with a pair of clippers. The pellets obtained were transformed into thin films (100 µm thick) by hot moulding with a Collin P 200 E bench press operating under the following conditions:
- temperature: 190°C;
- pressure: 100 atmospheres;
- time: 2 minutes.

Circular samples were collected from the films obtained, which were subsequently subjected to thermal analysis by means of Differential Scanning Calorimetry (DSC) and chemiluminescence analysis in order to determine the resistance to oxidation: further details relating to these analyses are provided below.

**Table 1**

| Mixtures | LLDPE (%) | D-α-tocopherol (%) | glutathione (%) | α-lipoic acid (%) | acetyl cysteine (%) |
|---|---|---|---|---|---|
| M0 | 100 | - | - | - | - |
| M1 | 98.5 | 1.5 | - | - | - |
| M2 | 98.3 | 1.5 | 0.2 | - | - |
| M3 | 98.0 | 1.5 | 0.5 | - | - |
| M4 | 98.0 | 1.5 | - | 0.5 | - |
| M5 | 97.5 | 1.5 | - | 1.0 | - |
| M6 | 98.3 | 1.5 | - | - | 0.2 |
| M7 | 97.5 | 1.5 | - | - | 1.0 |

### Process (b)

The linear low density polyethylene (LLDPE) and the various antioxidants (the amounts of the polyethylene and of the various antioxidants are indicated in Table 2) were fed to a Teachline Collin ZK 25 twin-screw extruder having a nominal screw diameter (D) of 25 mm and a L/D ratio of 56, equipped with a pelletizer.

The temperature profile in the zones of the extruder is the following:
- Z₁ = 180°C;
- Z₂ = 190°C;
- Z₃ = 220°C;
- Z₄ = 220°C;
- Z₅ = 200°C.

The temperature of the extruder head was maintained at 200°C (Z₅).

The screw rate was 80 revs per minute so as to have an average residence time in the various zones (Z₁ - Z₅) of the extruder equal to 108 seconds and the extrusion was carried out under a nitrogen flow.

The mixtures (E0 - E7) obtained from the extruder in the form of "spaghetti", were cooled to room temperature (25°C) by passage in a water cooling bath and subsequently pelletized. The pellets obtained were transformed into thin films (100 µm thick) by hot moulding with a Collin P 200 E bench press operating under the following conditions:
- temperature: 190°C;
- pressure: 100 atmospheres;
- time: 2 minutes.

Circular samples were collected from the films obtained, which were subsequently subjected to thermal analysis by means of Differential Scanning Calorimetry (DSC) and chemiluminescence analysis in order to determine the resistance to oxidation: further details relating to these analyses are provided below.

**Table 2**

| Mixtures | LLDPE (%) | D-α-tocopherol (%) | glutathione (%) | α-lipoic acid (%) | acetyl cysteine (%) |
|---|---|---|---|---|---|
| E0 | 100 | - | - | - | - |
| E1 | 98.5 | 1.5 | - | - | - |
| E2 | 98.3 | 1.5 | 0.2 | - | - |
| E3 | 97.75 | 1.5 | 0.75 | - | - |
| E4 | 98.0 | 1.5 | - | 0.5 | - |
| E5 | 97.5 | 1.5 | - | 1.0 | - |
| E6 | 98.0 | 1.5 | - | - | 0.5 |
| E7 | 98.5 | 0.75 | 0.75 | - | - |

### EXAMPLE 2

As specified above, the circular samples collected were subjected to thermal analysis by means of Differential Scanning Calorimetry (DSC) and chemiluminescence analysis in order to determine the resistance to oxidation.

### Thermal analysis

The thermal analysis was carried out using a Mettler Toledo DSC 30 Differential Scanning Calorimeter (DSC) operating according to the standard ASTM D3895-1998: "Oxidative-Induction Time of Polyolefins by Differential Scanning Calorimetry".

For the above purpose, the circular samples were positioned in open aluminium capsules, heated under a nitrogen flow until the desired temperature was reached, maintained at said temperature in an oxygen atmosphere until the appearance of the exothermic peak.

Table 3 indicates the temperature values and the Oxygen Induction Time values (OIT), determined as described above at three different temperatures (i.e., 170°C, 180°C and 190°C), of the samples obtained by means of process (a) (M0 - M7).

Table 4 indicates the temperature values and the Oxygen Induction Time values (OIT), determined as described above at three different temperatures (i.e., 170°C, 180°C and 190°C), of the samples obtained by means of process (b) (E0 - E7).

**Table 3**

| DSC | OIT at 170°C (minutes) | OIT at 180°C (minutes) | OIT at 190°C (minutes) |
|---|---|---|---|
| M0 | 4 | 2 | 0.5 |
| M1 | 6 | 2 | 1 |
| M2 | 28 | 8 | 5 |
| M3 | 61 | 25 | 14 |
| M4 | 123 | 50 | 30 |
| M5 | 56 | 32 | 11 |
| M6 | 41 | 15 | 4 |
| M7 | 148 | 58 | 40 |

**Table 4**

| DSC | OIT at 170°C (minutes) | OIT at 180°C (minutes) | OIT at 190°C (minutes) |
|---|---|---|---|
| E0 | 3 | 1,5 | 0.7 |
| E1 | 22 | 8 | 3 |
| E2 | 68 | 22 | 8 |
| E3 | 64 | 26 | 12 |
| E4 | 90 | 24 | 11 |
| E5 | 80 | 25 | 12 |
| E6 | 62 | 25 | 8 |
| E7 | 45 | 15 | 5 |

From the data provided in Table 3 and in Table 4, it can be deduced that the use of D-α-tocopherol combined with glutathione, or with α-lipoic acid, or with acetyl-cysteine, improves the Oxygen Induction Times (OIT) of both the samples obtained with process (a) (M2 - M7), and also the samples obtained with process (b) (E2 - E7).

### Chemiluminescence analysis

The chemiluminescence analysis was carried out in isothermal mode at different temperatures, in an atmosphere of controlled oxygen flow (50 ml/min), using a Lumipol 3 (Lmpl) luminometer produced by the Polymer Institute of Slovak Academy of Sciences (Bratislava - Slovakia).

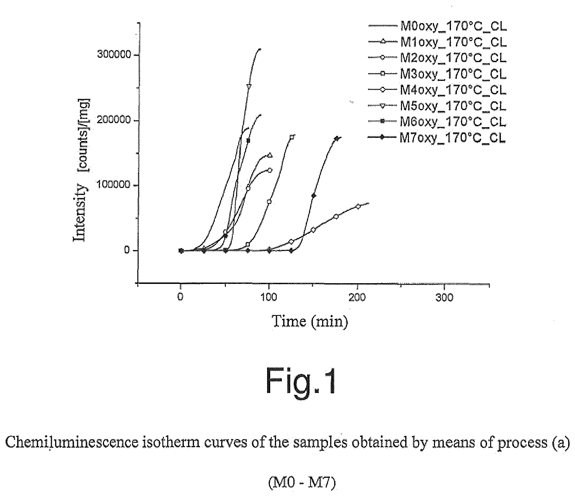

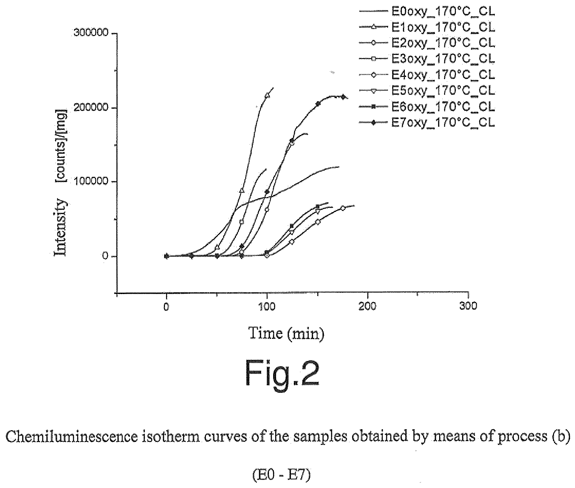

Figure 1 and Figure 2 show the chemiluminescence isotherm curves (CL) registered with Lmpl, at 170°C, which indicate the intensity ([count]/[mg] in the ordinate) in relation to the time ([min] in the abscissa) normalized with respect to the weight of the sample. The starting time of the oxidation was calculated as the intersection of the base line with the tangent at the sloping section of the curve. From said Figure 1 and Figure 2, it can be deduced that the use of D-α-tocopherol combined with glutathione, or with α-lipoic acid, or with acetyl-cysteine, improves the thermal stability with respect to both the polymer as such, and also with respect to the polymer to which only D-α-tocopherol has been added.

Table 5 indicates the temperature values and the Oxygen Induction Time values (OIT), determined as described above at three different temperatures (i.e., 170°C, 180°C and 190°C), of the samples obtained by means of process (a) (M0 - M7).

Table 6 indicates the temperature values and the Oxygen Induction Time values (OIT), determined as described above at three different temperatures (i.e., 170°C, 180°C and 190°C), of the samples obtained by means of process (b) (E0 - E7).

**Table 5**

| Lmpl | OIT at 170°C (minutes) | OIT at 180°C (minutes) | OIT at 190°C (minutes) |
|---|---|---|---|
| M0 | 26 | 15 | 7 |
| M1 | 36 | 19 | 10 |
| M2 | 44 | 25 | 15 |
| M3 | 79 | 41 | 30 |
| M4 | 111 | 57 | 43 |
| M5 | 55 | 38 | 19 |
| M6 | 50 | 30 | 15 |
| M7 | 135 | 66 | 58 |

**Table 6**

| Lmpl | OIT at 170°C (minutes) | OIT at 180°C (minutes) | OIT at 190°C (minutes) |
|---|---|---|---|
| E0 | 32 | 22 | 18 |
| E1 | 53 | 29 | 19 |
| E2 | 86 | 42 | 27 |
| E3 | 67 | 36 | 26 |
| E4 | 106 | 59 | 34 |
| E5 | 99 | 63 | 36 |
| E6 | 99 | 45 | 31 |
| E7 | 78 | 31 | 22 |

From the data provided in Table 5 and in Table 6, it can be deduced that the use of D-α-tocopherol combined with glutathione, or with α-lipoic acid, or with acetyl-cysteine, improves the Oxygen Induction Times (OIT) of both the samples obtained with process (a) (M2 - M7), and also the samples obtained with process (b) (E2 - E7).

## Claims

1. A stabilized composition comprising:
- at least one homopolymer or copolymer of ethylene;
- from 1% by weight to 2% by weight with respect to the total weight of said stabilized composition of at least one tocopherol or its analogous;
- from 0.1% by weight to 1.5% by weight with respect to the total weight of said stabilized composition of at least one compound containing sulfur selected from glutathione, α-lipoic acid, acetyl-cysteine.

2. The stabilized composition according to claim 1, wherein said homopolymer or copolymer of ethylene is selected from:
- high-density polyethylene (HDPE);
- medium-density polyethylene (MDPE);
- low-density polyethylene (LDPE);
- linear low-density polyethylene (LLDPE), linear very-low-density polyethylene (VLDPE), linear ultra-low-density polyethylene (ULDPE), which are copolymers of ethylene with at least one aliphatic α-olefin having the formula CH₂=CH-R wherein R represents a linear or branched alkyl group containing from 1 to 12 carbon atoms, selected from: propylene, 1-butene, 1-pentene, 1-hexene, 1-octene, 1-decene;
- ethylene-vinylacetate copolymers (EVA);
- ethylene-propylene elastomer copolymers (EPR);
- ethylene-propylene-diene elastomer copolymers (EPDM) wherein the diene contains from 3 to 12 carbon atoms and is selected from: 1,3-butadiene, isoprene, 1,4-hexadiene, 1,4-cyclohexadiene, 5-ethylidene-2-norbornene, 5-methylene-2-norbornene, or mixtures thereof;
or mixtures thereof.

3. The stabilized composition according to claim 1 or 2, wherein said tocopherol or its analogous is selected from tocopherols or their analogouses having general formula (I): 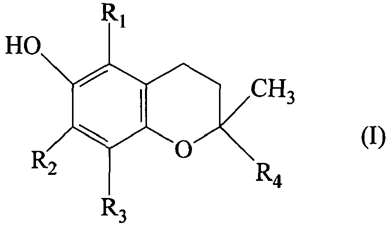 wherein:
- R₁, R₂ and R₃, equal to or different from each other, represent a hydrogen atom, or a methyl group;
- R₄ represents a group having formula (II) or (III):

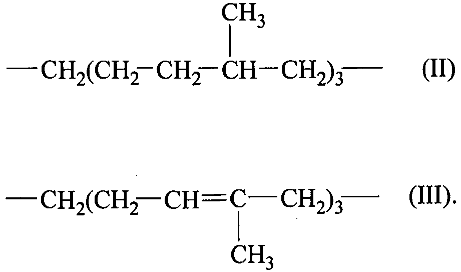

4. The stabilized composition according to claim 1 or 2, wherein said tocopherol or its analogous is selected from:
- D,L-α-tocopherol (synthetic vitamin E);
- methyl derivatives of [2-methyl-2-(4,8' 12'-trimethyltridecyl)-6-chromanol]tocol comprising D-α-tocopherol (5,7,8-trimethyltocol), D-β-tocopherol (5,8-dimethyltocol), D-γ-tocopherol (7,8-dimethyltocol), D-δ-tocopherol (8-methyl-tocol), or mixtures thereof (compounds present in natural Vitamin E);
- D-α-tocopherol acetate, D,L-α-tocopherol acetate, D-α-tocopherol succinate, acid succinate of polyethyleneglycol 1000 of D-α-tocopherol, D,L-α-tocopherol quinone, or mixtures thereof;
- methyl derivatives of [2-methyl-2-(4',8'12'-trimethyltrideca-3',7',11'-trienyl)-6-chromanol]tocotrienol;
or mixtures thereof.

5. The stabilized composition according to claim 1 or 2, wherein said tocopherol is D-α-tocopherol having the formula (Ia):

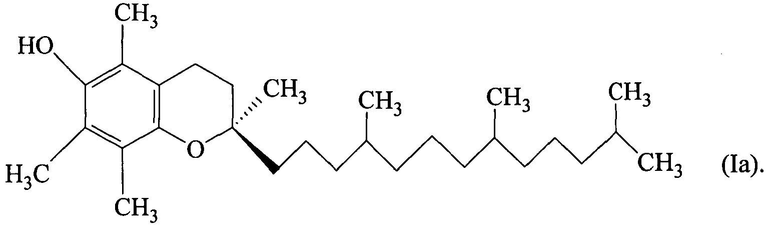

6. End-products obtained from the stabilized composition according to any of the previous claims.

## Patentansprüche

1. Eine stabilisierte Zusammensetzung, die Folgendes beinhaltet:
- mindestens ein Ethylen-Homopolymer oder -Copolymer;
- zu 1 Gew.-% bis 2 Gew.-%, bezogen auf das Gesamtgewicht der stabilisierten Zusammensetzung, mindestens ein Tocopherol oder sein Analog;
- zu 0,1 Gew.-% bis 1,5 Gew.-%, bezogen auf das Gesamtgewicht der stabilisierten Zusammensetzung, mindestens eine schwefelhaltige Verbindung, ausgewählt aus Glutathion, α-Liponsäure, Acetylcystein.

2. Stabilisierte Zusammensetzung gemäß Anspruch 1, wobei das Ethylen-Homopolymer oder -Copolymer aus Folgendem ausgewählt ist:
- Polyethylen hoher Dichte (HDPE);
- Polyethylen mittlerer Dichte (MDPE);
- Polyethylen niedriger Dichte (LDPE);
- linearem Polyethylen niedriger Dichte (LLDPE), linearem Polyethylen sehr niedriger Dichte (VLDPE), linearem Polyethylen ultraniedriger Dichte (ULDPE), bei denen es sich um Copolymere von Ethylen mit mindestens einem aliphatischen α-Olefin mit der Formel CH₂=CH-R handelt, wobei R eine lineare oder verzweigte Alkylgruppe darstellt, die 1 bis 12 Kohlenstoffatome enthält und aus Folgendem ausgewählt ist: Propylen, 1-Buten, 1-Penten, 1-Hexen, 1-Octen, 1-Decen;
- Ethylen-Vinylacetat-Copolymeren (EVA);
- Ethylen-Propylen-Elastomercopolymeren (EPR);
- Ethylen-Propylen-Dien-Elastomercopolymeren (EPDM), wobei das Dien 3 bis 12 Kohlenstoffatome enthält und aus Folgendem ausgewählt ist: 1,3-Butadien, Isopren, 1,4-Hexadien, 1,4-Cyclohexadien, 5-Ethyliden-2-norbornen, 5-Methylen-2-norbornen oder Mischungen davon;
oder Mischungen davon.

3. Stabilisierte Zusammensetzung gemäß Anspruch 1 oder 2, wobei das Tocopherol oder sein Analog aus Tocopherolen oder ihren Analoga mit der folgenden allgemeinen Formel (I) ausgewählt ist: 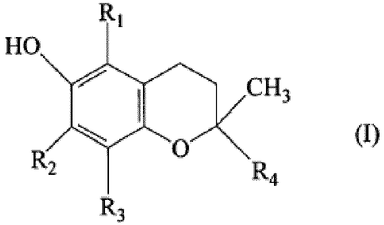 wobei:
- wobei R₁, R₂ und R₃, gleich oder verschieden voneinander, ein Wasserstoffatom oder eine Methylgruppe darstellen;
- R₄ eine Gruppe mit der Formel (II) oder (III) darstellt:

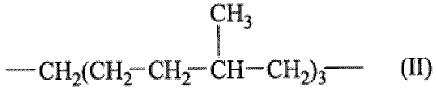

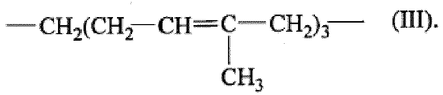

4. Stabilisierte Zusammensetzung gemäß Anspruch 1 oder 2, wobei das Tocopherol oder sein Analog aus Folgendem ausgewählt ist:
- D,L-α-Tocopherol (synthetischem Vitamin E);
- Methylderivaten von [2-Methyl-2-(4,8'12'-trimethyltridecyl)-6-chromanol]tocol, die D-α-Tocopherol (5,7,8-Trimethyltocol), D-β-Tocopherol (5,8-Dimethyltocol), D-γ-Tocopherol (7,8-Dimethyltocol), D-δ-Tocopherol (8-Methyltocol) oder Mischungen davon beinhalten (Verbindungen, die in natürlichem Vitamin E vorhanden sind);
- D-α-Tocopherolacetat, D,L-α-Tocopherolacetat, D-α-Tocopherolsuccinat, Säuresuccinat von Polyethylenglycol 1000 von D-α-Tocopherol, D,L-α-Tocopherolchinon oder Mischungen davon;
- Methylderivaten von [2-Methyl-2-(4',8'12'-trimethyltrideca-3',7',11'-trienyl)-6-chromanol]tocotrienol;
oder Mischungen davon.

5. Stabilisierte Zusammensetzung gemäß Anspruch 1 oder 2, wobei das Tocopherol D-α-Tocopherol mit der Formel (Ia) ist:

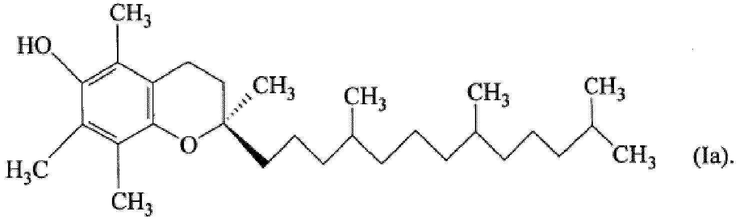

6. Endprodukte, die aus der stabilisierten Zusammensetzung gemäß einem der vorhergehenden Ansprüche erhalten werden.

## Revendications

1. Une composition stabilisée comprenant :
- au moins un homopolymère ou copolymère d'éthylène ;
- de 1 % en poids à 2 % en poids par rapport au poids total de ladite composition stabilisée d'au moins un tocophérol ou son analogue ;
- de 0,1 % en poids à 1,5 % en poids par rapport au poids total de ladite composition stabilisée d'au moins un composé contenant du soufre sélectionné parmi le glutathion, l'acide α-lipoïque, l'acétyl-cystéine.

2. La composition stabilisée selon la revendication 1, dans laquelle ledit homopolymère ou copolymère d'éthylène est sélectionné parmi :
- un polyéthylène haute densité (PEHD) ;
- un polyéthylène moyenne densité (PEMD) ;
- un polyéthylène basse densité (PEBD) ;
- un polyéthylène linéaire basse densité (PELBD), un polyéthylène linéaire très basse densité (PETBD), un polyéthylène linéaire ultra-basse densité (PEUBD), lesquels sont des copolymères d'éthylène avec au moins une α-oléfine aliphatique ayant la formule CH₂=CH-R dans laquelle R représente un groupe alkyle linéaire ou ramifié contenant de 1 à 12 atomes de carbone, sélectionné parmi : le propylène, le 1-butène, le 1-pentène, le 1-hexène, le 1-octène, le 1-décène ;
- des copolymères d'éthylène-acétate de vinyle (EVA) ;
- des copolymères élastomères d'éthylène-propylène (EPR) ;
- des copolymères élastomères d'éthylène-propylène-diène (EPDM) dans lesquels le diène contient de 3 à 12 atomes de carbone et est sélectionné parmi : le 1,3-butadiène, l'isoprène, le 1,4-hexadiène, le 1,4-cyclohexadiène, le 5-éthylidène-2-norbornène, le 5-méthylène-2-norbornène, ou des mélanges de ceux-ci ;
ou des mélanges de ceux-ci.

3. La composition stabilisée selon la revendication 1 ou la revendication 2, dans laquelle ledit tocophérol ou son analogue est sélectionné parmi des tocophérols ou leurs analogues qui ont la formule générale (I) : 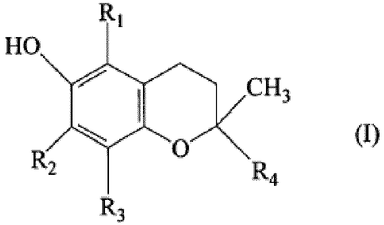 dans laquelle :
- R₁, R₂ et R₃, égaux ou différents l'un de l'autre, représentent un atome d'hydrogène, ou un groupe méthyle ;
- R₄ représente un groupe ayant la formule (II) ou (III) :

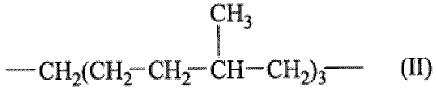

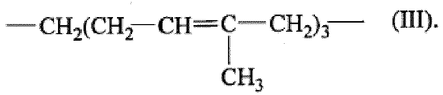

4. La composition stabilisée selon la revendication 1 ou la revendication 2, dans laquelle ledit tocophérol ou son analogue est sélectionné parmi :
- le D,L-α-tocophérol (vitamine E synthétique) ;
- des dérivés méthylés de [2-méthyl-2-(4,8'12'-triméthyltridécyl)-6-chromanol]tocol comprenant du D-α-tocophérol (5,7,8-triméthyltocol), du D-β-tocophérol (5,8-diméthyltocol), du D-γ-tocophérol (7,8-diméthyltocol), du D-δ-tocophérol (8-méthyl-tocol), ou des mélanges de ceux-ci (composés présents dans la vitamine E naturelle) ;
- l'acétate de D-α-tocophérol, l'acétate de D,L-α-tocophérol, le succinate de D-α-tocophérol, le succinate acide de polyéthylèneglycol 1000 de D-α-tocophérol, la quinone de D,L-α-tocophérol, ou des mélanges de ceux-ci ;
- des dérivés méthylés de [2-méthyl-2-(4',8'12'-triméthyltridéca-3',7',11'-triényl)-6-chromanol]tocotriénol ;
ou des mélanges de ceux-ci.

5. La composition stabilisée selon la revendication 1 ou la revendication 2, dans laquelle ledit tocophérol est du D-α-tocophérol ayant la formule (la) :

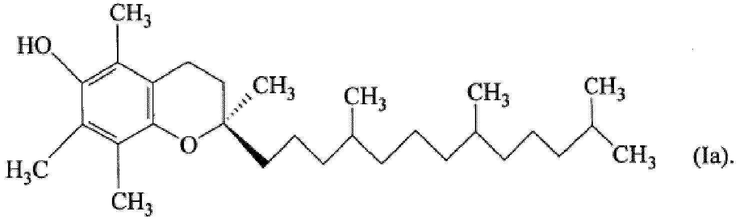

6. Produits finaux obtenus à partir de la composition stabilisée selon n'importe lesquelles des revendications précédentes.
